# EUROPEAN PATENT SPECIFICATION

(11) **EP 0 317 520 B1**
(45) Date of publication and mention of the grant of the patent: **02.06.1993**
(21) Application number: 88830437.5
(22) Date of filing: 25.10.1988
(51) Int. Cl.: B60N 2/38, A47C 3/18

(54) **A reversible driving position for agricultural tractors**
Umkehrbare Steuerungslage für landwirtschaftliche Schlepper
Position réversible de conduite pour tracteurs agricoles

(30) Priority: 19.11.1987 IT 5381487 U
(43) Date of publication of application: 24.05.1989
(73) Proprietor: SAME S.p.A., I-24047 Treviglio (Bergamo) (IT)
(72) Inventor: Bisleri, Secondo c/o Same S.p.A., I-24047 Treviglio (IT)
(74) Representative: Bosotti, Luciano

(56) References cited:
- GB-A- 1 581 842
- US-A- 3 236 556
- US-A- 3 831 699
- US-A- 4 014 593

## Description

The subject of the present invention is a reversible driving position for agricultural tractors, of the type set forth in the pre-characterising part of Claim 1, and known from GB-A-1 581 842.

The driving position according to the invention is characterised by the combination of features recited in the characterising portion of Claim 1.

The invention will now be described in detail with reference to the appended drawings, provided purely by way of non-limiting example, in which:
Figure 1 is a partially-sectioned perspective view of the cab of an agricultural tractor with a reversible driving position according to the invention,
Figure 2 is a perspective view of the seat of the driving position shown in a first condition of use, on an enlarged scale,
Figure 3 is a view similar to Figure 2 with the seat in a second condition of use, and
Figure 4 is an exploded perspective view of Figure 2.

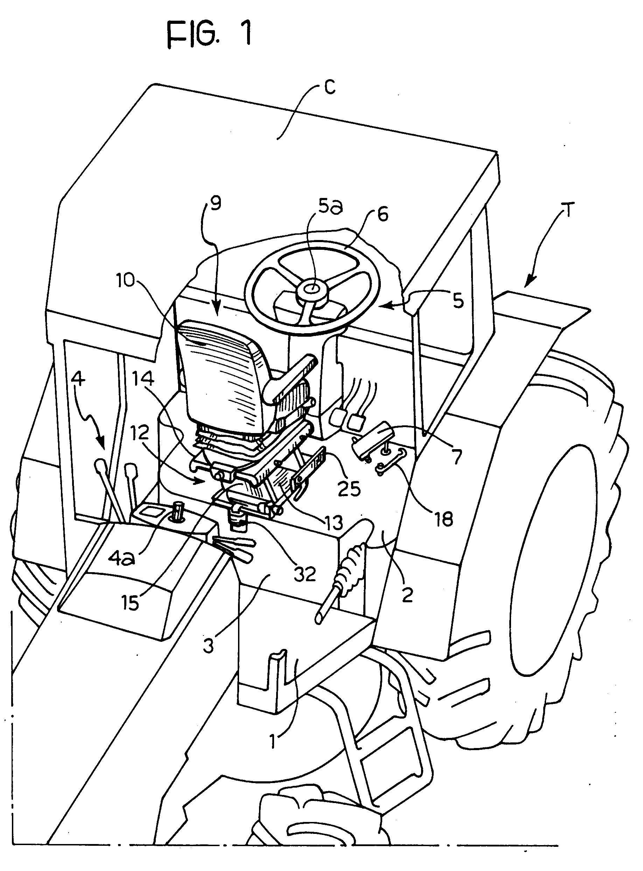

With reference initially to Figure 1, an agricultural tractor, indicated T, is provided with a driving cab C with a reversible driving position. The cab C has a floor with two different levels, a front lowered level 1 and a rear raised level 2, separated by a step 3 and in correspondence with which a front driving and operating unit and a rear driving and operating unit, generally indicated 4 and 5 respectively, are arranged. Each of the units 4 and 5 includes a steering column 4a, 5a adapted selectively to receive a removable steering wheel 6, and lever and pedal control members for actuating the propulsion members and the operating and signalling equipment of the tractor T in known manner. Amongst these are accelerator pedals, of which only the one associated with the rear unit 5 is shown, indicated 7 in Figure 1, this having a locking device 8 which can be activated to lock this pedal 7 and prevent its accidental operation when the tractor T is being driven by means of the front unit 4.

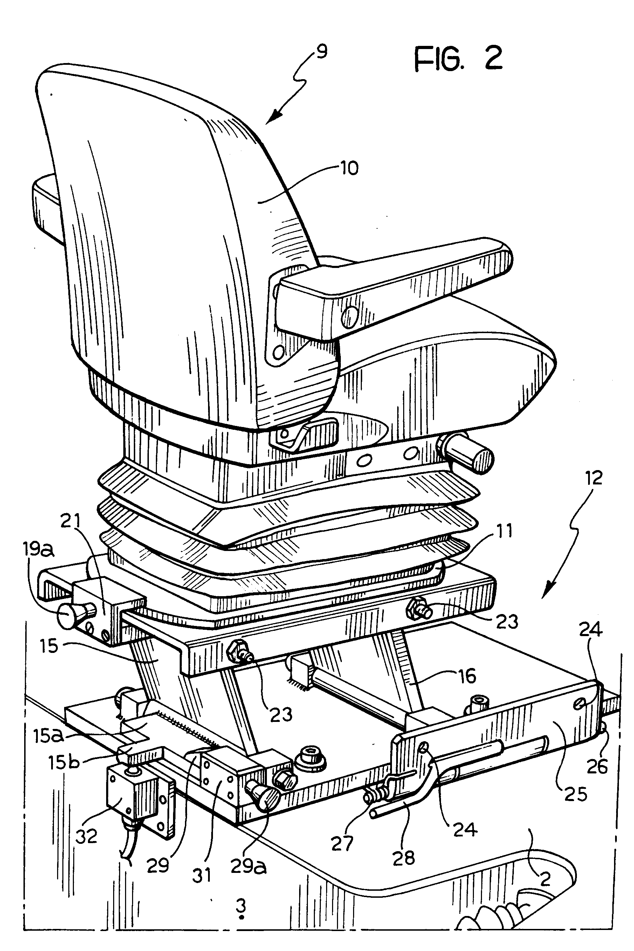

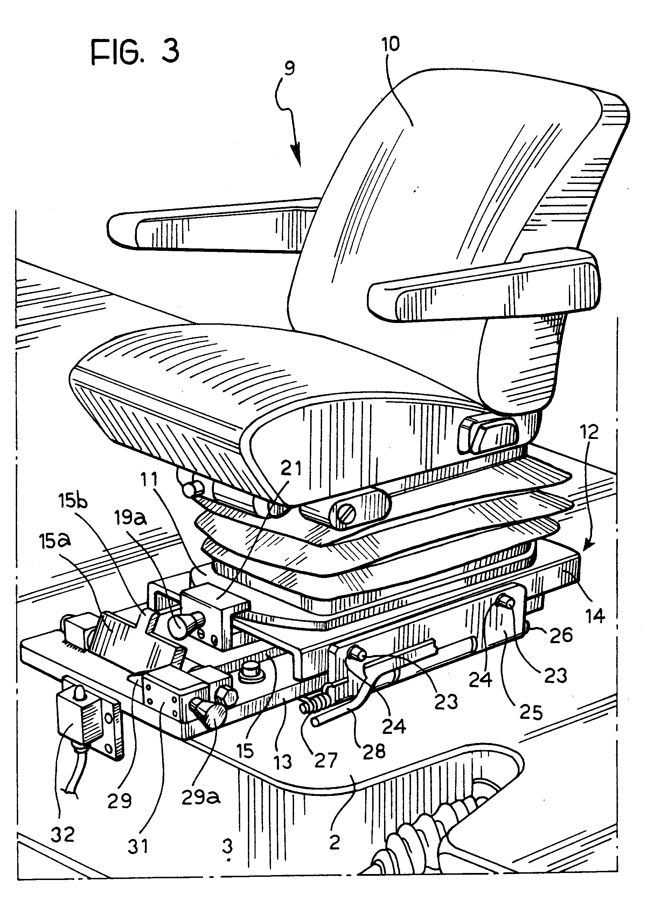

A seat interposed between the two units 4 and 5 is generally indicated 9 and can be used selectively in the two configurations shown in Figures 1 and 2 and in Figure 3, respectively, for driving the tractor T by means of one or other of these units.

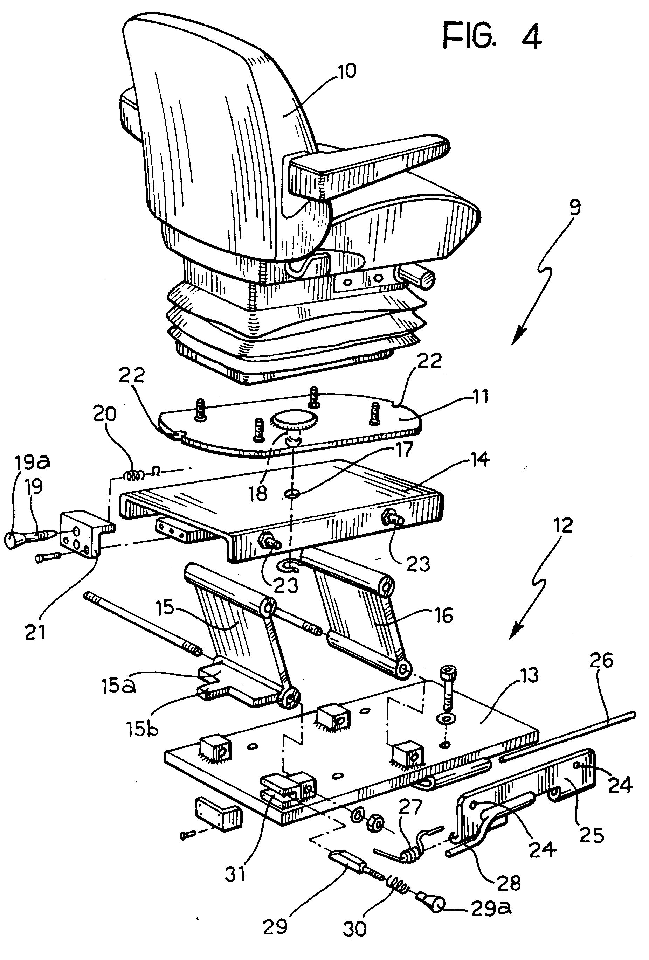

With reference in greater detail in Figure 4, the seat 9 includes a chair 10 to the bottom of which is fixed a plate 11 which is rotatably connected to an articulated parallelogram structure 12. This structure 12 comprises a base plate 13 fixed to the raised floor 2 near the step 1 and a platform 14 connected to the platform 13 by means of two articulated arms, a front arm 15 and a rear arm 16.

The platform 14 has a central aperture 17 rotatably engaged by a pivot pin 18, which is fixed to the plate 11, whereby the chair 10 can be rotated between the two opposing positions illustrated in Figures 1 and 2 and in Figure 3, respectively. In order to lock the chair 10 in one or other position, a pin 19 with a spring 20 is mounted slidably in a support 21 fixed to the front of the platform 14 and adapted to snap-engage one or other of two notches 22 formed in the ends of the plate 11.

Two locking pins 23 project from one side of the platform 14 and are adapted to engage, in the manner explained below, in two catch holes 24 formed in a lateral plate 25 which is articulated, by means of a horizontal pin 26, to the corresponding side of the base plate 13. The plate 25 is normally kept in the vertical position by means of a pin spring 27 and can be pivoted outwardly of the base plate 13 by means of an operating pedal 28.

At its end articulated to the base plate 13, the front arm 15 has a bent part 15a with a central appendage 15b. The bent part 15a cooperates, in the manner explained below, with a spring latch 29 which has a spring 30 and which can slide within a support 31 fixed to the front end of the base plate 13. The front end of the latch 29 is chamfered and both the latch 29 and the pin 19 are manually releasable by means of respective grips 19a, 29a.

A switch, indicated 32, is fixed to the step 3 adjacent the front end of the base plate 13 and is adapted to be operated, in the manner explained below, by the abutment appendage 15b of the front arm 15. The activation of the switch 32 prevents the operation of control functions of the front unit 4 and, in particular, the activation of the headlamps (not illustrated) of the tractor T.

As explained above, the seat 9 can assume two different positions which correspond to the driving of the tractor T by means of the front unit 4 and by means of the rear unit 5 respectively.

In the first position, illustrated in Figure 3, the chair 10 is rotated towards the unit 4 and locked in that position by means of the pin 19 which engages the corresponding notch 22 in the plate 11. The chair 10 is kept in the lowered position by virtue of the folding of the parallelogram structure 12, which corresponds to the positioning of the platform 14 adjacent the base plate 13, with the two arms 15 and 16 folded against the base 13. The platform 14 is kept in this position by the engagement of the pins 23 in the holes 24 in the lateral plate 25, whilst the latch 29 is situated in front of the bent portion 15a of the arm 15, whose appendage 15b projects upwardly. The switch 32 is therefore kept in the rest position, enabling the operation of the functions it controls (the switching-on of the headlamps of the tractor T).

In order to change from the forward driving position to the reverse driving position of Figures 1 and 2, it is necessary first to pivot the lateral plate 25 by means of the pedal 28, so as to disengage the pins 23 from the holes 24. At this point, it suffices to raise the chair 10 so as to pivot the arms 15 and 16 to the raised position illustrated. As a result of this pivoting, the bent part 15a of the front arm 15 passes over the latch 29 and is then snap-locked thereby against the base plate 13.

The pivoting of the front arm 15 also causes the lowering of the abutment appendage 15b and consequently the activation of the switch 32 whereby the operation of the function it controls is prevented (the switching-on of the headlamps of the tractor T).

The final operation is to release the pin 19 and rotate the chair 10 so as to orient it towards the rear unit 5. In this position, the pin 19 engages the corresponding notch 22 in the plate 11.

In order to return from the reverse position to the forward driving position, it suffices to release the latch 29 so as to allow the parallelogram structure 18 to fold, with the consequent snap-engagement of the pins 23 in the holes 24 in the plate 25, and once again to rotate the chair 10 in the manner described above.

## Claims

1. A reversible driving position for tractors, including a front driving and operating unit (4) and a rear driving and operating unit (5), and a seat (9) supported for rotation between the front and rear units (4, 5) by means of an articulated-parallelogram structure (12) including a base (13) fixed to the floor (2) of the tractor, a platform (14) which is parallel to the base (13) and on which a support (11) carrying the seat (10) can rotate, and arm means (15, 16) which are articulated at one end to the base (13) and at the other end to the platform (14) and which pivot between a lowered position in which the platform (14) is adjacent the base (13) and a raised position in which the platform (14) is raised from the base (13); first, second and third manual release means (23, 24, 25; 15a, 29, 30; 19, 20, 22) being provided for locking the platform (14) relative to the base (13) when the arm means (15, 16) are in the lowered position and in the raised position respectively, and for preventing the support (11) from rotating relative to the platform (14) in two opposing positions in which the seat (10) faces the front unit (4) and the rear unit (5) respectively, characterised in that, a lowered floor (1) and a raised floor (2) being associated with the front and rear driving and operating units (4, 5) respectively, the base (13) of said articulated-parallelogram structure (12) is fixed to the raised floor (2), the rotatable support (11) carrying the seat (10) is constituted by a plate (11) resting on said platform (14), and said arm means (15, 16) include a single pair of arms (15, 16) extending between and transverse to said base (13) and to said platform (14), in that said second locking means (15a, 29, 30) include a bent part (15a) fixed to one (15) of the two arms (15, 16) and a sprung latch (29, 30) carried by the base (13) and adapted to lock the bent part (15a) against the base (13) when the one arm (15) is in the raised position, and in that it includes switch means (32) for preventing activation of control functions of the front unit (4), the switch means (32) being operable automatically by a central appendage (15b) of said bent part (15a) as a result of the movement of said one arm (15) from the lowered position to the raised position.

2. A driving position according to Claim 1, characterised in that the first locking means (23, 24, 25) comprises a pair of lateral pins (23) projecting from one side of the platform (14) and adapted to engage corresponding catch holes (24) formed in a lateral plate (25) articulated to the corresponding side of the base (13) and movable in the sense corresponding to release of the pins (23) from the catch holes (24) by means of a control pedal (28) and against the action of resilient biassing means (27).

3. A driving position according to Claim 1, characterised in that the third locking means (19, 20, 22) include a sprung pin (19, 20) carried by the platform (14) and a pair of opposing notches (22) formed at the front and rear ends of the plate (11) and adapted to be engaged by the sprung pins (19, 20).

4. A driving position according to Claim 1, in which the rear unit (5) includes an accelerator pedal (7), characterised in that locking means (8) are provided for preventing the accidental operation of the accelerator pedal (7).

## Patentansprüche

1. Umkehrbare Steuerstellung für Traktoren, die eine vordere Steuer- und Bedienungseinheit (4) und eine hintere Steuer- und Bedienungseinheit (5), sowie einen Sitz (9), enthält, der mittels einer gelenkigen Parallelogramm-Konstruktion (12) drehbar zwischen der vorderen und der hinteren Einheit (4, 5) angebracht ist, die eine am Boden (2) des Traktors angebrachte Grundplatte (13) enthält, eine Plattform (14), die parallel zur Grundplatte (13) ist, und auf der sich eine Halterung (11), die den Sitz (10) trägt, drehen kann, sowie Armeinrichtungen (15, 16), die an einem Ende gelenkig an der Grundplatte (13) und am anderen Ende an der Plattform (14) angebracht sind, und die zwischen einer abgesenkten Stellung, in der die Plattform an (14) an der Grundplatte (13) anliegt, und einer angehobenen Stellung, in der die Platte (14) über der Grundplatte (13) angehoben ist, geschwenkt werden können; eine erste, eine zweite und eine dritte manuelle Entriegelungseinrichtung (23, 24, 25; 15a, 29, 30; 19, 20, 22), die dazu dienen, die Plattform (14) in Bezug auf die Grundplatte (13) zu arretieren, wenn sich die Armeinrichtungen (15, 16) in der abgesenkten Stellung beziehungsweise in der angehobenen Stellung befinden, und dazu, zu verhindern, daß sich die Halterung (11) in Bezug auf die Plattform (14) in zwei einander entgegengesetzte Stellungen dreht, in denen der Sitz (10) der vorderen Einheit (4) beziehungsweise der hinteren Einheit (5) zugewandt ist, dadurch gekennzeichnet, daß ein abgesenkter Boden (1) und ein erhöhter Boden (2) zur vorderen beziehungsweise zur hinteren Steuer- und Bedienungseinheit (4, 5) gehören, daß die Grundplatte (13) der gelenkigen Parallelogramm-Konstruktion (12) am erhöhten Boden (2) befestigt ist, wobei die drehbare Halterung (11), die den Sitz (10) trägt, von einer Platte (11) gebildet wird, die von der Plattform (14) getragen wird, und daß die Armeinrichtungen (15, 16) ein einzelnes Paar Arme (15, 16) enthalten, die sich zwischen der Grundplatte (13) und der Plattform (14) und quer dazu erstrecken, dadurch daß die zweite Arretiereinrichtung (15a, 29, 30) einen gebogenen Teil (15a) enthält, der an einem (15) der beiden Arme (15, 16) befestigt ist, sowie eine federgespannte Klinke (29, 30), die von der Grundplatte (13) getragen wird, und den gebogenen Teil (15a) an der Grundplatte (13) arretiert, wenn sich der eine Arm (15) in der angehobenen Stellung befindet, und dadurch, daß sie eine Schaltereinrichtung (32) enthält, die die Betätigung von Steuerfunktionen der vorderen Einheit (4) verhindert, wobei die Schaltereinrichtung (32) durch die Bewegung des einen Armes (15) von der abgesenkten Stellung in die angehobene Stellung automatisch von einer mittleren Verlängerung (15b) des gebogenen Teils (15a) betätigt wird.

2. Steuerstellung nach Anspruch 1, dadurch gekennzeichnet, daß die erste Arretiereinrichtung (23, 24, 25) ein Paar seitlicher Stifte (23) umfaßt, die von einer Seite der Plattform (14) vorstehen und in entsprechende Arretierlöcher (24) eingreifen, die in einer Seitenplatte (25) ausgeformt sind, die an der entsprechenden Seite der Grundplatte (13) gelenkig angebracht ist, und die mittels eines Bedienungsfußhebels (28) und gegen die Wirkung einer elastischen Spanneinrichtung (27) in der Richtung beweglich ist, in der die Stifte (23) aus den Arretierlöchern (24) gelöst werden.

3. Steuerstellung nach Anspruch 1, dadurch gekennzeichnet, daß die dritte Arretiereinrichtung (19, 20, 22) einen federgespannten Stift (19, 20) enthält, der von der Plattform (14) getragen wird, sowie ein Paar einander gegenüber liegender Kerben (22) die am vorderen und am hinteren Ende der Platte (11) ausgeformt sind, und in die der federgespannten Stift (19, 20) eingreift.

4. Steuerstellung nach Anspruch 1, wobei die hintere Einheit (5) ein Gaspedal (7) enthält, dadurch gekennzeichnet, daß eine Sperreinrichtung (8) vorhanden ist, die die versehentliche Betätigung des Gaspedals (7) verhindert.

## Revendications

1. Poste de conduite réversible pour tracteur, comportant un ensemble (4) de fonctionnement et de conduite avant et un ensemble (5) de fonctionnement et de conduite arrière, et un siège (9) supporté pour pouvoir tourner entre les ensembles avant et arrière (4, 5) à l'aide d'une structure (12) formant parallélogramme articulé comportant une base (13) fixée sur le plancher (2) du tracteur, une plate-forme (14) qui est parallèle à la base (13) et sur laquelle un support (11) supportant le siège(10) peut tourner, et des moyens formant bras (15, 16) qui sont articulés à une extrémité sur la base (13) et à l'autre extrémité sur la plate-forme (14) et qui pivotent entre une position abaissée dans laquelle la plate-forme (14) est adjacente à la base (13) et une position surélevée dans laquelle la plate-forme (14) est surélevée par rapport à la base (13) ; des premiers, deuxièmes et troisièmes moyens manuels de libération (23, 24, 25 ; 15a, 29, 30 ; 19, 20, 22) étant prévus pour verrouiller la plate-forme (14) par rapport à la base (13) lorsque les moyens (15, 16) formant bras sont dans la position abaissée et dans la position surélevée respectivement, et pour empêcher la rotation du support (11) par rapport à la plate-forme (14) dans les deux positions opposées dans lesquelles le siège (10) se trouve en vis à vis de l'ensemble avant (4) et de l'ensemble arrière (5) respectivement, caractérisé en ce qu'un plancher abaissé (1) et un plancher surélevé (2) sont associés aux ensembles (4, 5) de fonctionnement et de conduite avant et arrière respectivement, la base (13) de ladite structure (12) formant parallélogramme articulé est fixée au plancher surélevé (2) le support pouvant tourner (11) portant le siège (10) est constitué d'une plaque (11) reposant sur ladite plate-forme (14) et lesdits moyens (15, 16) formant bras comportant une seule paire de bras (15, 16) s'étendant transversalement entre ladite base (13) et ladite plate-forme (14), et en ce que lesdits deuxièmes moyens (15a, 29, 30) de verrouillage comportent une partie repliée (15a) fixée sur un premier (15) des deux bras (15, 16) et un loquet (29, 30) à ressort porté par la base (13) et adapté pour verrouiller la partie repliée (15a) sur la base (13) lorsque le premier bras (15) est dans la position surélevée et en ce qu'il comporte des moyens (32) formant commutateur pour empêcher l'actionnement de fonctions de commande de l'ensemble avant (4), les moyens (32) formant commutateur pouvant être actionnés automatiquement par une saillie centrale (15b) de la partie repliée (15a) lors du déplacement dudit premier bras (15) à partir de la position abaissée jusqu'à la position surélevée.

2. Poste de conduite selon la revendication 1, caractérisé en ce que les premiers moyens de verrouillage (23, 24, 25) comprennent deux doigts latéraux (23) faisant saillie à partir d'un côté de la plate-forme (14) et adaptés pour coopérer avec des trous de réception (24) correspondants formés dans une plaque latérale (25) articulée sur le côté correspondant de la base (13) et pouvant être déplacée dans la direction correspondant à la libération des doigts (23) des trous de réception (24) à l'aide d'une pédale de commande (28) et à l'encontre de l'action de moyens (27) de rappel élastique.

3. Poste de conduite selon la revendication 1, caractérisé en ce que les troisième's moyens de verrouillage (19, 20, 22) comportent un doigt à ressort (19, 20) porté par la plate-forme (14) et deux encoches (22) opposées formées aux extrémités avant et arrière de la plaque (11) et adaptées pour être en prise avec les doigts à ressort (19, 20).

4. Poste de conduite selon la revendication 1, dans lequel l'ensemble arrière (5) comporte une pédale d'accélérateur (7), caractérisé en ce que des moyens de verrouillage (8) sont prévus pour empêcher le fonctionnement accidentel de la pédale d'accélérateur (7).
